# EUROPEAN PATENT APPLICATION

(11) **EP 4 797 512 A1**
(43) Date of publication of application: **26.08.2026**
(21) Application number: 25213557.9
(22) Date of filing: 05.11.2025
(51) Int. Cl.: H02K 15/048, H02K 3/12, H02K 15/043

(54) **APPARATUS FOR FORMING CONTINUOUS WINDING COIL AND METHOD OF CONTROLLING THE SAME**

(30) Priority: 19.02.2025 KR 20250021792
(71) Applicant: Hyundai Mobis Co., Ltd., Gangnam-gu Seoul 06141 (KR)
(72) Inventor: KIM, Man Ki, 16891 Yongin-si, Gyeonggi-do (KR); HONG, Seung Pyo, 16891 Yongin-si, Gyeonggi-do (KR); KIM, Jae Hong, 16891 Yongin-si, Gyeonggi-do (KR)
(74) Representative: Jung, Minkyu

(57) **Abstract**

An apparatus for forming a winding coil (20) out of a continuous wire and a method of controlling said apparatus. The apparatus including - a transfer unit (100) configured to transfer said coil(20), - an upper mold unit (200) comprising an upper mold tool (250) and configured to form a leg portion (22) of said coil and - a lower mold unit (300) comprising a lower mold tool (350) and configured to form a crown portion (24) of said coil. Wherein said upper mold unit (200) and tool (250) plus said lower mold unit (300) including the tool (350) are sequentially transferrable in a longitudinal direction of the coil (20) to continuously form said coil. Said continuous wire might have a round cross-section and said coil (20) is suitable for a wave-winding of an electric machine driving a vehicle.

## Description

### BACKGROUND

### FIELD

The present disclosure relates to an apparatus for forming a continuous winding coil and a method of controlling the apparatus, and more particularly, to an apparatus for forming a continuous winding coil and a method of controlling the apparatus, capable of flexibly producing coils of various specifications by a sequential transfer method and a tool change method.

### DISCUSSION OF THE BACKGROUND

Recently, policies promoting the adoption of eco-friendly vehicles, such as electric vehicles, hybrid vehicles, and hydrogen fuel cell vehicles, have been strengthened. In such vehicles, motors are used as driving power sources.

In order to enhance the output of driving motors used in such eco-friendly vehicles, a continuous winding coil (a coil wire having a predetermined length, with triangular bent portions formed continuously at upper and lower sides in a longitudinal direction) is inserted into a plurality of slots that are radially formed in a stator core of a motor.

Coils to which a continuous winding method is applied have advantages of minimizing the need for a welding process for connecting coils in an existing hairpin manufacturing process, eliminating an epoxy dipping process for welded portions, and reducing the axial height of the motor.

However, when forming multiple shapes of connected coils at once, a bending mold is used for forming, which causes a large amount of bending stress to be applied to bent portions of the coils, resulting in damage to insulating coatings, and, depending on the shapes of the coils, requiring multiple forming machines.

Accordingly, there is a need for a manufacturing technology capable of minimizing damage to the insulating coatings of coils and flexibly producing coils of various specifications.

The background art of the present disclosure is disclosed in Korean Patent No. 10-2729435 (registered on November 8, 2024, entitled "Continuous Winding Wire Cutting Apparatus").

### SUMMARY

Various embodiments are directed to providing an apparatus for forming a continuous winding coil and a method of controlling the apparatus, which are capable of flexibly producing coils of various specifications by a sequential coil transfer method and a tool change method, and minimizing damage to insulating coatings of the coils.

An apparatus for forming a continuous winding coil according to an embodiment of the present disclosure may include: a transfer unit configured to transfer a coil; an upper mold unit configured to form a leg portion of the coil; and a lower mold unit configured to form a crown portion of the coil. The upper mold unit and the lower mold unit may be sequentially transferred in a longitudinal direction of the coil to continuously form the coil.

The upper mold unit and the lower mold unit may be independently controlled.

The upper mold unit and the lower mold unit may be arranged in point symmetry with each other.

The upper mold unit may include: an upper mold base; an upper mold frame provided to be slidably movable relative to the upper mold base; an upper mold tool supply component provided on the upper mold frame, and providing an upper mold tool for forming the coil; and an upper-mold-side bending component that is mounted with the upper mold tool provided by the upper mold tool supply component and is configured to bend the coil.

The upper mold tool supply component may include: a plurality of upper mold supply blocks provided to be slidably movable from the upper mold frame toward the coil; and an upper mold movable housing that is provided on each of the plurality of upper mold supply blocks so as to be movable in a longitudinal direction of the upper mold supply block, is equipped with the upper mold tool, and is selectively engaged with the upper-mold-side bending component.

The upper mold tool may include: an upper mold cam block provided in the upper mold movable housing and configured to be movable in a longitudinal direction; and an upper mold roller assembly configured to form the leg portion under pressure of the upper mold cam block.

An upper mold stepped portion may be formed on an upper end of the upper mold cam block and configured to come into contact with the upper-mold-side bending component. An upper mold pitch adjustment end may be formed on a lower end of the upper mold cam block and configured to come into contact with the upper mold roller assembly and adjust a pitch of the upper mold roller assembly.

The lower mold unit may include: a lower mold base; a lower mold frame provided to be slidably movable relative to the lower mold base; a lower mold tool supply component provided on the lower mold frame, and providing a lower mold tool for forming the coil; and a lower-mold-side bending component that is mounted with the lower mold tool provided by the lower mold tool supply component and is configured to bend the coil.

The lower mold tool supply component may include: a plurality of lower mold supply blocks provided to be slidably movable from the lower mold frame toward the coil; and a lower mold movable housing that is provided on each of the plurality of lower mold supply blocks so as to be movable in a longitudinal direction of the lower mold supply block, is equipped with the lower mold tool, and is selectively engaged with the lower-mold-side bending component.

The lower mold tool may include: a lower mold cam block provided in the lower mold movable housing and configured to be movable in a longitudinal direction; and a lower mold roller assembly configured to form the crown portion under pressure of the lower mold cam block.

A lower mold stepped portion may be formed on a lower end of the lower mold cam block and configured to come into contact with the lower-mold-side bending component. A lower mold pitch adjustment end may be formed on an upper end of the lower mold cam block and configured to come into contact with the lower mold roller assembly and adjust a pitch of the lower mold roller assembly.

The upper-mold-side bending component and the lower-mold-side bending component may be simultaneously operated in directions facing each other.

A method of controlling an apparatus for forming a continuous winding coil according an embodiment of the present disclosure may include: a coil securing operation of securing a coil to a transfer unit; an initial bending operation of forming a leg portion and a crown portion in the coil by an upper mold tool of an upper mold unit and a lower mold tool of a lower mold unit; an upper-mold-side bending operation of moving, after the initial bending operation, the upper mold unit with the lower mold tool maintained stationary, and forming a leg portion continuously following the crown portion by the upper mold tool; a lower-mold-side bending operation of moving, after the upper-mold-side bending operation, the lower mold unit with the upper mold tool maintained stationary, and forming a crown portion continuously following the leg portion by the lower mold tool; and a returning operation of transferring the coil by a set distance by the transfer unit, and transferring the upper mold unit and the lower mold unit to initial positions thereof.

After the initial bending operation, the upper-mold-side bending operation and the lower-mold-side bending operation may be repeated n times.

In the initial bending operation, the upper-mold-side bending operation, and the lower-mold-side bending operation, each of the upper mold tool and the lower mold tool may be replaced with another one depending on pitches of the leg portion and the crown portion of the coil.

As described above, according to an apparatus for forming a continuous winding coil and a method of controlling the apparatus, coils of various specifications can be flexibly produced by a sequential coil transfer method and a tool change method, thereby improving productivity and reducing mold investment costs for each coil pattern.

According to the present disclosure, damage to insulating coatings of coils can be minimized, thereby improving quality.

### BRIEF DESCRIPTION OF THE DRAWINGS

FIG. 1 is a perspective view schematically illustrating an apparatus for forming a continuous winding coil according to an embodiment of the present disclosure.
FIG. 2 is a side view schematically illustrating the continuous winding coil forming apparatus according to an embodiment of the present disclosure.
FIG. 3 is a perspective view for describing an operation of an upper mold unit of the continuous winding coil forming apparatus according to an embodiment of the present disclosure.
FIG. 4 is a perspective view for describing an operation of a lower mold unit of the continuous winding coil forming apparatus according to an embodiment of the present disclosure.
FIG. 5 is a diagram schematically illustrating coil forming by the continuous winding coil forming apparatus according to an embodiment of the present disclosure.
FIG. 6 is a diagram illustrating an upper mold tool supply component of the continuous winding coil forming apparatus according to an embodiment of the present disclosure.
FIG. 7 is a diagram illustrating a lower mold tool supply component of the continuous winding coil forming apparatus according to an embodiment of the present disclosure.
FIG. 8 is a diagram illustrating coil forming by the upper mold tool supply component and the lower mold tool supply component according to an embodiment of the present disclosure.
FIG. 9 is a perspective view schematically illustrating an upper mold tool and a lower mold tool according to an embodiment of the present disclosure.
FIGS. 10A and 10B are a diagram illustrating pitch variation of a coil by the upper mold tool and the lower mold tool according to an embodiment of the present disclosure.
FIG. 11 is a diagram schematically illustrating a coil forming process by the continuous winding coil forming apparatus according to an embodiment of the present disclosure.
FIG. 12 is a flowchart showing a method of controlling the continuous winding coil forming apparatus according to an embodiment of the present disclosure.
FIG. 13 is a control block diagram of the continuous winding coil forming apparatus according to an embodiment of the present disclosure.

### DETAILED DESCRIPTION

Hereinafter, an apparatus for forming a continuous winding coil according to an embodiment of the present disclosure will be described with reference to the accompanying drawings. It should be noted that the drawings are not to precise scale and may be exaggerated in thickness of lines or sizes of components for descriptive convenience and clarity only.

Furthermore, the terms as used herein are defined by taking functions of the disclosure into account and can be changed according to the custom or intention of users or operators. Therefore, definition of the terms should be made according to the overall disclosures set forth herein.

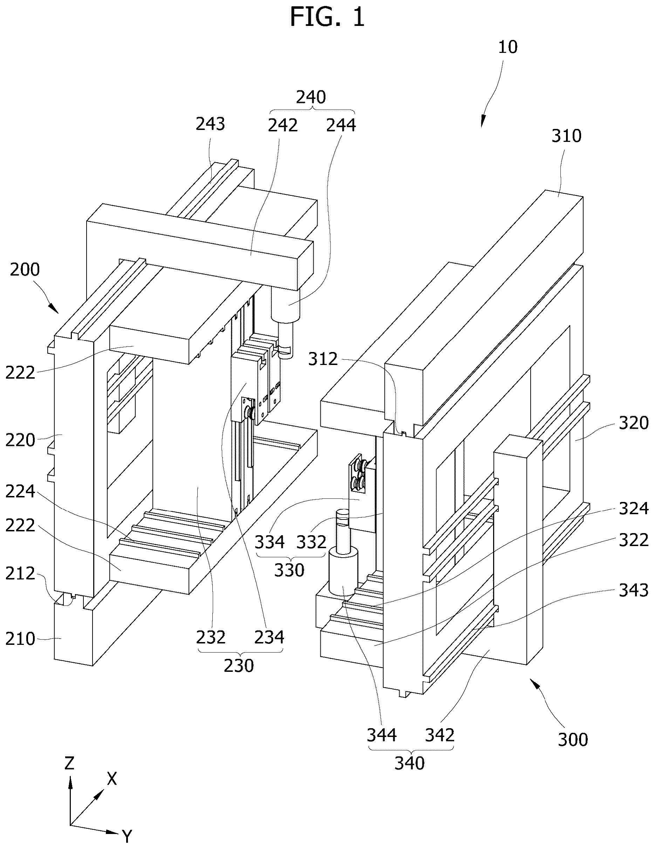

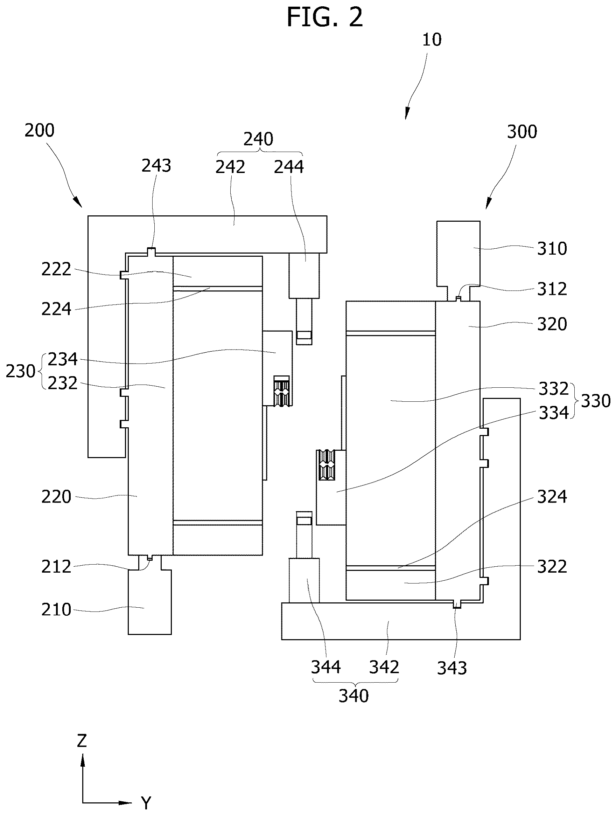

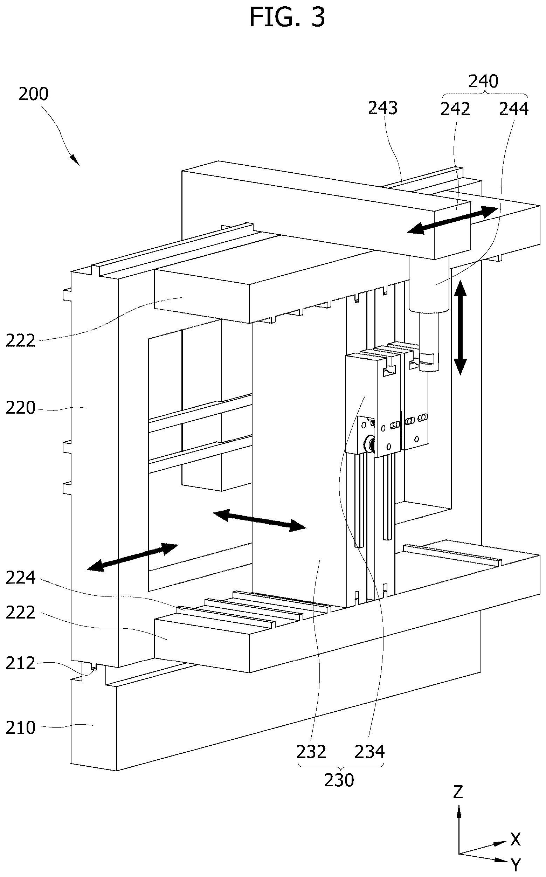

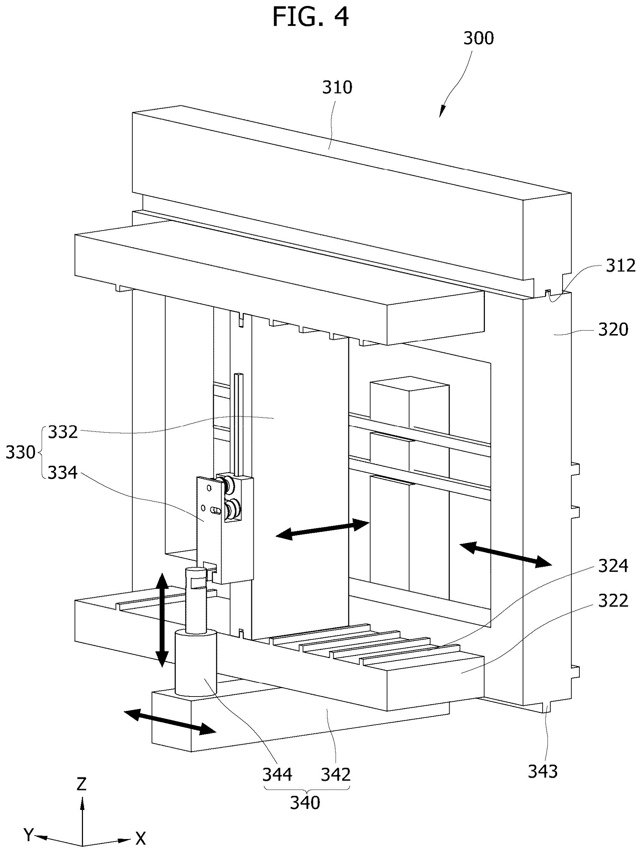

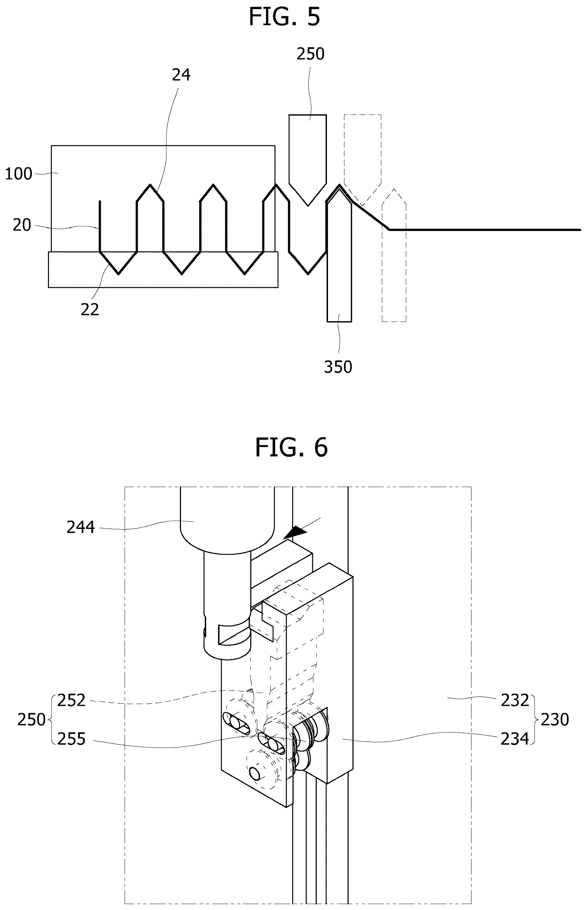

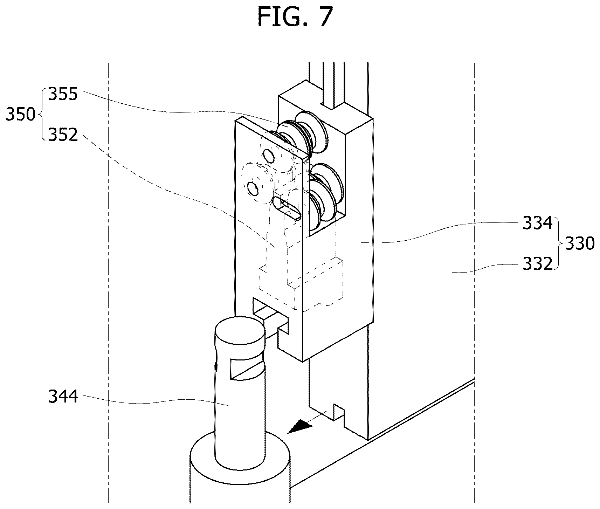

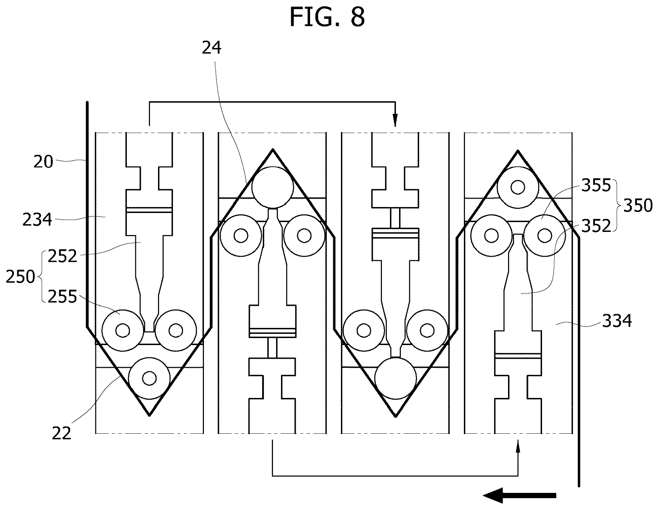

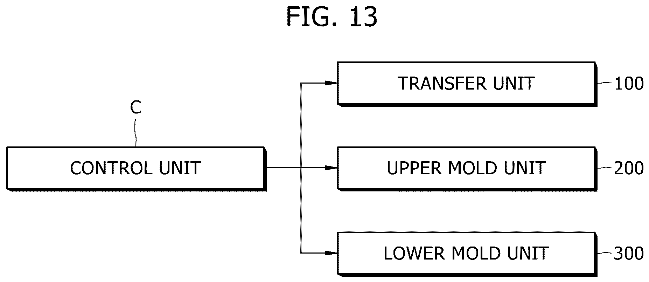

FIG. 1 is a perspective view schematically illustrating an apparatus for forming a continuous winding coil according to an embodiment of the present disclosure. FIG. 2 is a side view schematically illustrating the continuous winding coil forming apparatus according to an embodiment of the present disclosure. FIG. 3 is a perspective view for describing an operation of an upper mold unit of the continuous winding coil forming apparatus according to an embodiment of the present disclosure. FIG. 4 is a perspective view for describing an operation of a lower mold unit of the continuous winding coil forming apparatus according to an embodiment of the present disclosure. FIG. 5 is a diagram schematically illustrating coil forming by the continuous winding coil forming apparatus according to an embodiment of the present disclosure. FIG. 6 is a diagram illustrating an upper mold tool supply component of the continuous winding coil forming apparatus according to an embodiment of the present disclosure. FIG. 7 is a diagram illustrating a lower mold tool supply component of the continuous winding coil forming apparatus according to an embodiment of the present disclosure. FIG. 8 is a diagram illustrating coil forming by the upper mold tool supply component and the lower mold tool supply component according to an embodiment of the present disclosure. FIG. 13 is a control block diagram of the continuous winding coil forming apparatus according to an embodiment of the present disclosure.

Referring to FIGS. 1 to 8, and 13, an apparatus 10 for forming a continuous winding coil according to an embodiment of the present disclosure sequentially transfers a coil 20, and is capable of producing coils 20 of various specifications by a tool change method.

The continuous winding coil forming apparatus 10 according to the present embodiment may include a transfer unit 100, an upper mold unit 200, and a lower mold unit 300. The continuous winding coil forming apparatus 10 according to the present embodiment may include a control unit C. The control unit C can control operations of the transfer unit 100, the upper mold unit 200, and the lower mold unit 300, respectively.

The transfer unit 100 may be configured to secure the coil 20 and move the coil 20, in which a leg portion 22 and a crown portion 24 are successively formed by the upper mold unit 200 and the lower mold unit 300, by a preset distance in each step.

The transfer unit 100 may be moved by a driving unit (not illustrated). The driving unit may be implemented with a servo motor. The control unit C can control the movement of the transfer unit 100 through the driving unit.

The upper mold unit 200 and the lower mold unit 300 may be arranged in point symmetry with each other. Although in the present embodiment, the upper mold unit 200 and the lower mold unit 300 are illustrated as being arranged in point symmetry with each other, the disclosure is not limited thereto, and the upper mold unit 200 may be disposed at an upper side, and the lower mold unit 300 may be disposed at a lower side, so that the leg portion 22 and the crown portion 24 of the coil 20 may be simultaneously formed. The control unit C can independently control the operations of the upper mold unit 200 and the lower mold unit 300. Accordingly, the control unit C may control the upper mold unit 200 alone, the lower mold unit 300 alone, or both the upper and lower mold units 200, 300 simultaneously. Even when operated simultaneously, the processes of the upper mold unit 200 and the lower mold unit 300 may remain independent of each other.

A first direction described hereinafter may be parallel to an X-axis based on FIG. 1, and may refer to a transfer direction of the coil 20. A second direction may be parallel to a Y-axis based on FIG. 1, and may refer to a width direction of the coil 20. A third direction may be parallel to a Z-axis based on FIG. 1, and may refer to a height direction of the coil 20.

The upper mold unit 200 may be configured to form the leg portion 22 of the coil 20.

For example, the upper mold unit 200 may include an upper mold base 210, an upper mold frame 220 configured to be slidably movable relative to the upper mold base 210, an upper mold tool supply component 230 provided on the upper mold frame 220 and configured to provide an upper mold tool 250 for forming the coil 20, and an upper-mold-side bending component 240 on which the upper mold tool 250 provided by the upper mold tool supply component 230 is mounted and which bends the coil 20.

The upper mold frame 220 is slidably mounted on an upper portion of the upper mold base 210, and may be slidably moved in the first direction by a separate driving unit (not illustrated). The driving unit may be implemented with a servo motor.

The upper mold frame 220 and the upper mold base 210 are coupled to each other by a first upper mold guide 212 so as to be slidably movable. The first upper mold guide 212 may be implemented with a linear motion (LM) guide.

The upper mold frame 220 may be formed in a "C"-shaped cross-sectional shape. In other words, the upper mold frame 220 may be provided, on upper and lower ends thereof, respectively, with upper mold support flanges 222 that extend toward the coil 20 so that the upper mold tool supply component 230, which will be described below, is supported by the upper mold support flanges 222.

The upper mold tool supply component 230 may be configured for tool change.

The upper mold tool supply component 230 may include a plurality of upper mold supply blocks 232 configured to be slidably movable toward the coil 20 from the upper mold frame 220, and an upper mold movable housing 234 provided on each of the upper mold supply blocks 232 and configured to be movable in a longitudinal direction of the corresponding upper mold supply block 232. The upper mold movable housing 234 may be provided with the upper mold tool 250 and may be selectively engaged with the upper-mold-side bending component 240.

Upper and lower ends of each of the upper mold supply blocks 232 may be slidably coupled to the upper mold support flanges 222 of the upper mold frame 220. Each of the upper mold supply blocks 232 may slide in the second direction by a separate driving unit (not illustrated). The driving unit may be implemented with an air or oil cylinder. The driving unit may be implemented not only with a cylinder but also with a servo motor or the like, and may be modified in various manners within a technical concept capable of selectively sliding the plurality of upper mold supply blocks 232 toward the coil 20.

In other words, various modifications may be possible, such as an individual cylinder type or a multi-stage cylinder type including a valve.

The upper mold supply block 232 and the upper mold support flange 222 may be coupled to each other by a second upper mold guide 224 so as to be slidably movable. The second upper mold guide 224 may be implemented with an LM guide.

The second upper mold guide 224 may be provided on each of the upper and lower ends of the upper mold supply block 232.

The upper-mold-side bending component 240 may include an upper mold moving part 242 provided on an upper portion of the upper mold frame 220 and configured to be movable in the first direction, and an upper mold pressing part 244 provided on an end of the upper mold moving part 242 and configured to press the upper mold movable housing 234 downward when in a coupled state with the upper mold movable housing 234.

The upper mold moving part 242 and the upper mold frame 220 may be coupled to each other by a third upper mold guide 243 so as to be slidably movable. The third upper mold guide 243 may be implemented with an LM guide.

The upper mold moving part 242 may have an "L"-shaped structure surrounding a perimeter of the upper mold frame 220, thereby preventing the upper mold moving part 242 from bending due to a load of the upper mold pressing part 244. The third upper mold guide 243 may be formed at a plurality of positions.

The lower mold unit 300 may be configured to form the crown portion 24 of the coil 20.

For example, the lower mold unit 300 may include a lower mold base 310, a lower mold frame 320 configured to be slidably movable relative to the lower mold base 310, a lower mold tool supply component 330 provided on the lower mold frame 320 and configured to provide a lower mold tool 350 for forming the coil 20, and a lower-mold-side bending component 340 on which the lower mold tool 350 provided by the lower mold tool supply component 330 is mounted and which bends the coil 20.

The lower mold frame 320 is slidably mounted on an upper portion of the lower mold base 310, and may be slidably moved in the first direction by a separate driving unit (not illustrated). The driving unit may be implemented with a servo motor.

The lower mold frame 320 and the lower mold base 310 are coupled to each other by a first lower mold guide 312 so as to be slidably movable. The first lower mold guide 312 may be implemented with an LM guide.

The lower mold frame 320 may be formed in a "C"-shaped cross-sectional shape. In other words, the lower mold frame 320 may be provided, on upper and lower ends thereof, respectively, with lower mold support flanges 322 that extend toward the coil 20 so that the lower mold tool supply component 330, which will be described below, is supported by the lower mold support flanges 322.

The lower mold tool supply component 330 may be configured for tool change.

The lower mold tool supply component 330 may include a plurality of lower mold supply blocks 332 configured to be slidably movable toward the coil 20 from the lower mold frame 320, and a lower mold movable housing 334 provided on each of the lower mold supply blocks 332 so as to be movable in a longitudinal direction of the lower mold supply block 232. The lower mold movable housing 334 is provided with the lower mold tool 350 and is selectively engaged with the lower-mold-side bending component 340.

Upper and lower ends of each of the lower mold supply blocks 332 may be slidably coupled to the lower mold support flanges 322 of the lower mold frame 320. Each of the lower mold supply blocks 332 may slide in the second direction by a separate driving unit (not illustrated). The driving unit may be implemented with an air or oil cylinder. The driving unit may be implemented not only with a cylinder but also with a servo motor or the like, and may be modified in various manners within a technical concept capable of selectively sliding the plurality of lower mold supply blocks 332 toward the coil 20.

In other words, various modifications may be possible, such as an individual cylinder type or a multi-stage cylinder type including a valve.

The lower mold supply block 332 and the lower mold support flange 322 are coupled to each other by a second lower mold guide 324 so as to be slidably movable. The second lower mold guide 324 may be implemented with an LM guide.

The second lower mold guide 324 may be provided on each of the upper and lower ends of the lower mold supply block 332.

The lower-mold-side bending component 340 may include a lower mold moving part 342 provided on a lower portion of the lower mold frame 320 and configured to be movable in the first direction, and a lower mold pressing part 344 provided on an end of the lower mold moving part 342 and configured to press the lower mold movable housing 334 upward when in a coupled state with the lower mold movable housing 334.

The lower mold moving part 342 and the lower mold frame 320 may be coupled to each other by a third lower mold guide 343 so as to be slidably movable. The third lower mold guide 343 may be implemented with an LM guide.

The lower mold moving part 342 may have an "L"-shaped structure surrounding a perimeter of the lower mold frame 320, thereby preventing the lower mold moving part 342 from bending due to a load of the lower mold pressing part 344. The third lower mold guide 343 may be formed at a plurality of positions.

Referring to FIG. 5, the coil 20 may be secured to the transfer unit 100, and the upper mold movable housing 234 and the lower mold movable housing 334 may be pressed toward the coil 20 by operations of the upper-mold-side bending component 240 of the upper mold unit 200 and the lower-mold-side bending component 340 of the lower mold unit 300, respectively, thereby initially forming a leg portion 22 and a crown portion 24, respectively. The upper-mold-side bending component 240 may then be moved in the first direction to form a leg portion 22 continuously following the crown portion 24, and subsequently, the lower-mold-side bending component 340 may be moved in the first direction to form a crown portion 24.

Referring to FIG. 8, a tool change function may be performed by the upper mold tool supply component 230 and the lower mold tool supply component 330.

Specifically, after the formation of the leg portion 22 by the upper-mold-side bending component 240, when replacement of the upper mold tool 250 is needed, the upper mold movable housing 234 that is provided with the upper mold tool 250 having a specific pitch among the plurality of upper mold supply blocks 232 may be supplied. The upper-mold-side bending component 240 may move to a position corresponding to the corresponding upper mold movable housing 234, and may press the upper mold movable housing 234, thereby forming the leg portion 22.

After the formation of the crown portion 24 by the lower-mold-side bending component 340, when replacement of the lower mold tool 350 is needed, the lower mold movable housing 334 that is provided with the lower mold tool 350 having a specific pitch among the plurality of lower mold supply blocks 332 may be supplied. The lower-mold-side bending component 340 may move to a position corresponding to the corresponding lower mold movable housing 334, and may press the lower mold movable housing 334, thereby forming the crown portion 24.

The upper mold movable housing 234 may be configured to allow the upper mold tool 250 to be mounted thereon and to be coupled to the upper-mold-side bending component 240.

The upper mold movable housing 234 may have a rectangular parallelepiped shape with an internal space so that the upper mold tool 250 can be provided therein. An upper portion of the upper mold movable housing 234 may be engaged with the upper-mold-side bending component 240, and may have a mounting portion formed to allow the upper-mold-side bending component 240 to come into contact with the upper mold tool 250.

The mounting portion may be formed as a slot having a "T"-shaped cross-section, and an end of the upper mold pressing part 244, which is coupled to the mounting portion, may also have a "T"-shaped cross-section.

The lower mold movable housing 334 may be configured to allow the lower mold tool 350 to be mounted thereon and to be engaged with the lower-mold-side bending component 340.

The lower mold movable housing 334 may have a rectangular parallelepiped shape with an internal space so that the lower mold tool 350 can be provided therein. A lower portion of the lower mold movable housing 334 may be engaged with the lower-mold-side bending component 340, and may have a mounting portion formed to allow the lower-mold-side bending component 340 to come into contact with the lower mold tool 350.

The mounting portion may be formed as a slot having a "T"-shaped cross-section, and an end of the lower mold pressing part 344, which is coupled to the mounting portion, may also have a "T"-shaped cross-section.

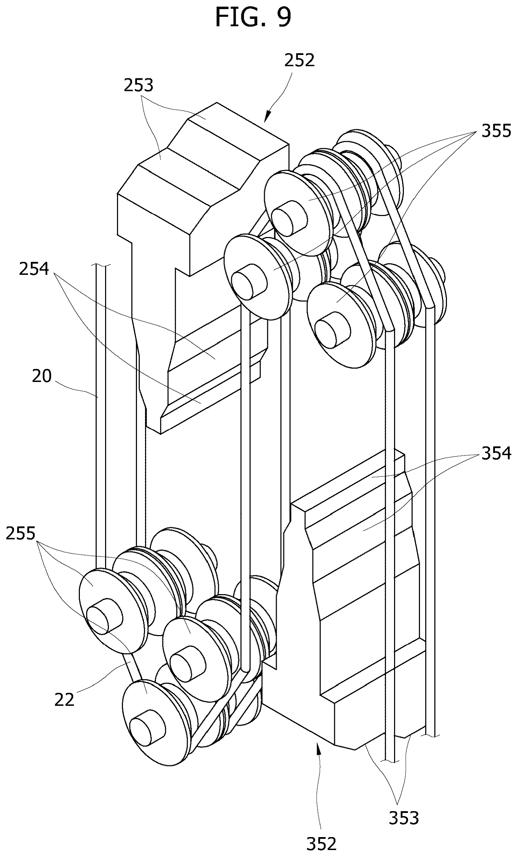

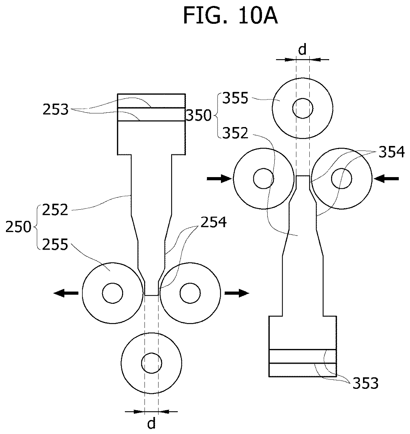

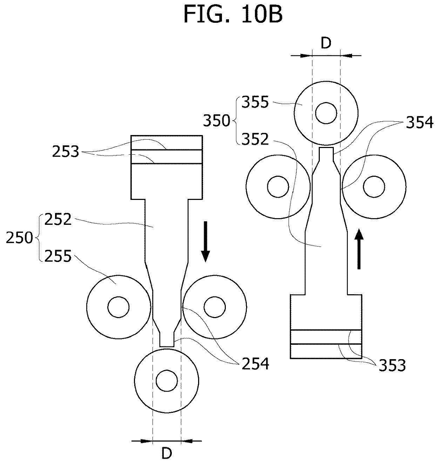

FIG. 9 is a perspective view schematically illustrating the upper mold tool and the lower mold tool according to an embodiment of the present disclosure. FIGS. 10A and 10B are a diagram illustrating pitch variation of the coil by the upper mold tool and the lower mold tool according to an embodiment of the present disclosure.

Referring to FIGS. 1 to 10, the upper mold tool 250 according to the present embodiment may be provided in the upper mold movable housing 234, and may include an upper mold cam block 252 configured to be movable in a longitudinal direction, and an upper mold roller assembly 255 configured to form the leg portion 22 under the pressure of the upper mold cam block 252.

In an embodiment, the upper mold cam block 252 may be coated with diamond-like carbon (DLC). The DLC coating enables the upper mold cam block 252 to have relatively high hardness, wear resistance, and a relatively low friction coefficient, and may also prevent corrosion of the upper mold cam block 252.

The upper mold roller assembly 255 may include a plurality of rollers rotatably coupled to the upper mold movable housing 234. As illustrated in FIGS. 9 and 10, the upper mold roller assembly 255 may include three rollers, with a central roller positioned at a lower side.

In the present embodiment, the upper mold roller assembly 255 is illustrated as including three rollers; however, the disclosure is not limited thereto. In the case where the leg portion 22 of the coil 20 has multiple cavities, the number and arrangement of rollers may be modified accordingly.

The upper mold cam block 252 according to the present embodiment may vary in position to adjust the pitch of the leg portion 22. The aforementioned adjustment may be performed by changing a contact region between the upper mold pressing part 244 and the upper mold cam block 252, and may be achieved by the movement of the upper mold supply block 232.

An upper mold stepped portion 253, which comes into contact with the upper-mold-side bending component 240, may be formed on an upper end of the upper mold cam block 252, and an upper mold pitch adjustment end 254, which comes into contact with the upper mold roller assembly 255 to adjust the pitch of the upper mold roller assembly 255, may be formed on a lower end of the upper mold cam block 252.

As a degree of movement of the upper mold supply block 232 is adjusted, an insertion depth of the upper mold pressing part 244 into the upper mold movable housing 234 may vary, causing a lowering position of the upper mold cam block 252 to vary. As a result, a spacing of the upper mold roller assembly 255, which directly contacts the coil 20, may be adjusted. Accordingly, the pitch of the coil 20 may be adjusted.

More specifically, as illustrated in FIG. 10, depending on the insertion depth of the upper mold pressing part 244 into the upper mold movable housing 234, the upper mold pressing part 244 may come into contact with either a first step or a second step of the upper mold stepped portion 253. In the case where the upper mold pressing part 244 comes into contact with the first step, the upper mold roller assembly 255 contacts a first step of the upper mold pitch adjustment end 254, thereby allowing the leg portion 22 to be formed with a pitch determined by the first step. In the case where the upper mold pressing part 244 comes into contact with the second step, the upper mold cam block 252 moves downward, thereby causing the upper mold roller assembly 255 to contact a second step of the upper mold pitch adjustment end 254. As a result, the upper mold roller assembly 255 spreads apart, allowing the leg portion 22 to be formed with a pitch determined by the second step.

Here, the adjustment based on the degree of movement of the upper mold supply block 232 is made possible by formation of an inclined surface between the first step and the second step of the upper mold stepped portion 253.

In an embodiment, the lower mold cam block 352 may be coated with DLC. The DLC coating enables the lower mold cam block 352 to have relatively high hardness, wear resistance, and a relatively low friction coefficient, and may also prevent corrosion of the lower mold cam block 352.

The lower mold roller assembly 355 may include a plurality of rollers rotatably coupled to the lower mold movable housing 334. As illustrated in FIGS. 9 and 10, the lower mold roller assembly 355 may include three rollers, with a central roller positioned at an upper side.

In the present embodiment, the number and arrangement of rollers in the lower mold roller assembly 355 may also be modified depending on cavities of the crown portion 24 of the coil 20.

The lower mold cam block 352 according to the present embodiment may vary in position to adjust the pitch of the crown portion 24. The aforementioned adjustment may be performed by changing a contact region between the lower mold pressing part 344 and the lower mold cam block 352, and may be achieved by the movement of the lower mold supply block 332.

A lower mold stepped portion 353, which comes into contact with the lower-mold-side bending component 340, may be formed on a lower end of the lower mold cam block 352, and a lower mold pitch adjustment end 354, which comes into contact with the lower mold roller assembly 355 to adjust the pitch of the lower mold roller assembly 355, may be formed on an upper end of the lower mold cam block 352.

As a degree of movement of the lower mold supply block 332 is adjusted, an insertion depth of the lower mold pressing part 344 into the lower mold movable housing 334 may vary, causing a lifting position of the lower mold cam block 352 to vary. As a result, a spacing of the lower mold roller assembly 355, which directly contacts the coil 20, may be adjusted. Accordingly, the pitch of the coil 20 may be adjusted.

Since pitch adjustment of the crown portion 24 of the coil 20 by the lower mold cam block 352 is the same as that by the upper mold cam block 252, a detailed description thereof is omitted herein, and reference is made to the foregoing explanation.

Hereinafter, a method of controlling the continuous winding coil forming apparatus according to an embodiment of the present disclosure will be described as follows.

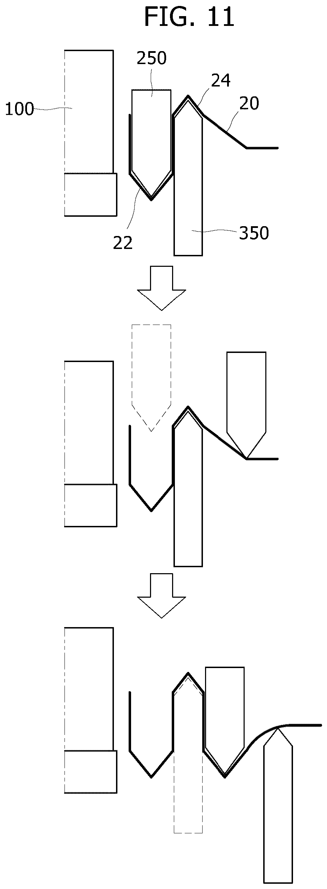

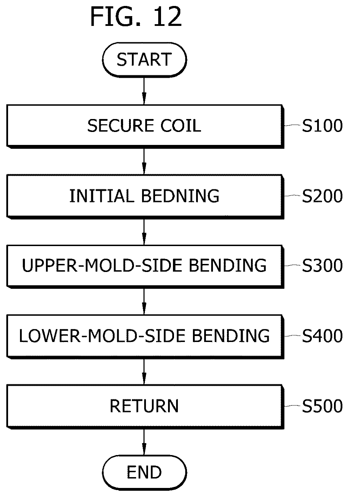

FIG. 11 is a diagram schematically illustrating a coil forming process by the continuous winding coil forming apparatus according to an embodiment of the present disclosure. FIG. 12 is a flowchart showing a method of controlling the continuous winding coil forming apparatus according to an embodiment of the present disclosure.

Referring to FIGS. 1 to 13, the method of controlling the continuous winding coil forming apparatus according to the present embodiment may include a coil securing step S100, an initial bending step S200, an upper-mold-side bending step S300, a lower-mold-side bending step S400, and a returning step S500.

In the coil securing step S100, a leading end of the coil 20, in which neither the leg portion 22 nor the crown portion 24 has been formed, is mounted to the transfer unit 100.

After the coil 20 is mounted to the transfer unit 100, the initial bending step S200 is performed.

In the initial bending step S200, the leg portion 22 and the crown portion 24 are formed in the coil 20 by the upper mold tool 250 of the upper mold unit 200 and the lower mold tool 350 of the lower mold unit 300.

More specifically, the upper mold movable housing 234 and the lower mold movable housing 334 are pressed toward the coil 20 by the operation of the upper-mold-side bending component 240 of the upper mold unit 200 and the lower-mold-side bending component 340 of the lower mold unit 300, respectively, thereby initially forming the leg portion 22 and the crown portion 24. In other words, as the upper mold supply block 232 advances toward the coil 20, the upper mold pressing part 244 and the upper mold movable housing 234 are coupled to each other, and by the downward movement of the upper mold movable housing 234, the leg portion 22 may be formed by the upper mold cam block 252 and the upper mold roller assembly 255 provided inside the upper mold movable housing 234. Simultaneously, as the lower mold supply block 332 advances toward the coil 20, the lower mold pressing part 344 and the lower mold movable housing 334 are coupled to each other, and by the upward movement of the lower mold movable housing 334, the crown portion 24 may be formed by the lower mold cam block 352 and a lower mold roller assembly 355 provided inside the lower mold movable housing 334.

Subsequently, the upper-mold-side bending step S300 is performed. In the upper-mold-side bending step S300 after the initial bending step S200, the upper mold unit 200 is moved while the lower mold tool 350 remains stationary, allowing the upper mold tool 250 to form a leg portion 22 continuously following the crown portion 24.

Here, a plurality of upper mold supply blocks 232 may selectively advance depending on the pitch of the leg portion 22 to be coupled to the upper mold pressing part 244. As a result, a desired pitch of the leg portion 22 may be selectively determined. That is, various pitches can be achieved through tool change.

Subsequently, the lower-mold-side bending step S400 is performed. In the lower-mold-side bending step S400 after the upper-mold-side bending step S300, the lower mold unit 300 is moved while the upper mold tool 250 remains stationary, allowing the lower mold tool 350 to form a crown portion 24 continuously following the leg portion 22.

In the formation of the crown portion 24, similarly to the upper-mold-side bending step S300, a plurality of lower mold supply blocks 332 may selectively advance depending on the pitch of the crown portion 24 to be coupled to the lower mold pressing part 344. As a result, a desired pitch of the crown portion 24 may be selectively determined.

After the initial bending step S200, the upper-mold-side bending step S300 and the lower-mold-side bending step S400 may be repeated n times.

It is to be understood that in the initial bending step S200, the upper-mold-side bending step S300, and the lower-mold-side bending step S400, the upper mold tool 250 and the lower mold tool 350 may form various pitches of the leg portion 22 and the crown portion 24 of the coil 20 through tool change.

Subsequently, the returning step S500 is performed. In the returning step S500, the transfer unit 100 may move the coil 20 by a preset distance, and the upper mold unit 200 and the lower mold unit 300 may be moved to initial positions thereof.

During the tool change, as the degree of movement of the upper mold supply block 232 is adjusted, the insertion depth of the upper mold pressing part 244 into the upper mold movable housing 234 may vary, causing the lowering position of the upper mold cam block 252 to vary. As a result, the spacing of the upper mold roller assembly 255, which directly contacts the coil 20, may be adjusted. Accordingly, the pitch of the coil 20 may be adjusted. In other words, as illustrated in FIG. 10, depending on the insertion depth of the upper mold pressing part 244 into the upper mold movable housing 234, the upper mold pressing part 244 may come into contact with either the first step or the second step of the upper mold stepped portion 253. In the case where the upper mold pressing part 244 comes into contact with the first step, the upper mold roller assembly 255 contacts the first step of the upper mold pitch adjustment end 254, thereby allowing the leg portion 22 to be formed with the pitch determined by the first step. In the case where the upper mold pressing part 244 comes into contact with the second step, the upper mold cam block 252 moves downward, thereby causing the upper mold roller assembly 255 to contact the second step of the upper mold pitch adjustment end 254. As a result, the upper mold roller assembly 255 spreads apart, allowing the leg portion 22 to be formed with the pitch determined by the second step.

Since the pitch adjustment of the crown portion 24 of the coil 20 by the lower mold cam block 352 is the same as that by the upper mold cam block 252, a detailed description thereof is omitted herein, and reference is made to the foregoing explanation.

As described above, according to the present disclosure, the sequential coil transfer method and the tool change method enable flexible production of coils of various specifications, thereby improving productivity, and reducing the mold investment cost for each coil pattern. Furthermore, damage to the insulating coating of the coil can be minimized, thereby improving the quality of the coil.

While the present disclosure has been described with reference to the specific embodiments illustrated in the attached drawings, this is only for illustrative purposes, and it will be apparent to those skilled in the art that various modifications and other equivalent embodiments may be made based on the embodiments.

Therefore, the true technical scope of the present disclosure should be defined by the following claims.

## Claims

1. An apparatus for forming a continuous winding coil, comprising:
a transfer unit configured to transfer a coil;
an upper mold unit configured to form a leg portion of the coil; and
a lower mold unit configured to form a crown portion of the coil,
wherein the upper mold unit and the lower mold unit are sequentially transferred in a longitudinal direction of the coil, and continuously form the coil.

2. The apparatus for forming the continuous winding coil of claim 1, wherein the upper mold unit and the lower mold unit are independently controlled.

3. The apparatus for forming the continuous winding coil of claim 1 or 2, wherein the upper mold unit and the lower mold unit are arranged in point symmetry with each other.

4. The apparatus for forming the continuous winding coil of any one of claims 1 to 3, wherein the upper mold unit comprises:
an upper mold base;
an upper mold frame provided to be slidably movable relative to the upper mold base;
an upper mold tool supply component provided on the upper mold frame, and providing
an upper mold tool for forming the coil; and
an upper-mold-side bending component mounted with the upper mold tool provided by the upper mold tool supply component, the upper-mold-side bending component being configured to bend the coil.

5. The apparatus for forming the continuous winding coil of claim 4, wherein the upper mold tool supply component comprises:
a plurality of upper mold supply blocks provided to be slidably movable from the upper mold frame toward the coil; and
an upper mold movable housing provided on each of the plurality of upper mold supply blocks so as to be movable in a longitudinal direction of the upper mold supply block, and equipped with the upper mold tool, the upper mold movable housing being selectively engaged with the upper-mold-side bending component.

6. The apparatus for forming the continuous winding coil of claim 5, wherein the upper mold tool comprises:
an upper mold cam block provided in the upper mold movable housing and configured to be movable in a longitudinal direction; and
an upper mold roller assembly configured to form the leg portion under pressure of the upper mold cam block.

7. The apparatus for forming the continuous winding coil of claim 6, wherein an upper mold stepped portion is formed on an upper end of the upper mold cam block and configured to come into contact with the upper-mold-side bending component, and an upper mold pitch adjustment end is formed on a lower end of the upper mold cam block and configured to come into contact with the upper mold roller assembly and adjust a pitch of the upper mold roller assembly.

8. The apparatus for forming the continuous winding coil of any one of claims 4 to 7, wherein the lower mold unit comprises:
a lower mold base;
a lower mold frame provided to be slidably movable relative to the lower mold base;
a lower mold tool supply component provided on the lower mold frame, and providing a lower mold tool for forming the coil; and
a lower-mold-side bending component mounted with the lower mold tool provided by the lower mold tool supply component, the lower-mold-side bending component being configured to bend the coil.

9. The apparatus for forming the continuous winding coil of claim 8, wherein the lower mold tool supply component comprises:
a plurality of lower mold supply blocks provided to be slidably movable from the lower mold frame toward the coil; and
a lower mold movable housing provided on each of the plurality of lower mold supply blocks so as to be movable in a longitudinal direction of the lower mold supply block, and equipped with the lower mold tool, the lower mold movable housing being selectively engaged with the lower-mold-side bending component.

10. The apparatus for forming the continuous winding coil of claim 9, wherein the lower mold tool comprises:
a lower mold cam block provided in the lower mold movable housing and configured to be movable in a longitudinal direction; and
a lower mold roller assembly configured to form the crown portion under pressure of the lower mold cam block.

11. The apparatus for forming the continuous winding coil of claim 10, wherein a lower mold stepped portion is formed on a lower end of the lower mold cam block and configured to come into contact with the lower-mold-side bending component, and a lower mold pitch adjustment end is formed on an upper end of the lower mold cam block and configured to come into contact with the lower mold roller assembly and adjust a pitch of the lower mold roller assembly.

12. The apparatus for forming the continuous winding coil of any one of claims 8 to 11, wherein the upper-mold-side bending component and the lower-mold-side bending component are simultaneously operated in directions facing each other.

13. A method of controlling an apparatus for forming a continuous winding coil, the method comprising:
a coil securing operation of securing a coil to a transfer unit;
an initial bending operation of forming a leg portion and a crown portion in the coil by an upper mold tool of an upper mold unit and a lower mold tool of a lower mold unit;
an upper-mold-side bending operation of moving, after the initial bending operation, the upper mold unit with the lower mold tool maintained stationary, and forming a leg portion continuously following the crown portion by the upper mold tool;
a lower-mold-side bending operation of moving, after the upper-mold-side bending operation, the lower mold unit with the upper mold tool maintained stationary, and forming a crown portion continuously following the leg portion by the lower mold tool; and
a returning operation of transferring the coil by a set distance by the transfer unit, and transferring the upper mold unit and the lower mold unit to initial positions thereof.

14. The method of controlling the apparatus for forming the continuous winding coil of claim 13, wherein after the initial bending operation, the upper-mold-side bending operation and the lower-mold-side bending operation are repeated n times.

15. The method of controlling the apparatus for forming the continuous winding coil of claim 13 or 14, wherein in the initial bending operation, the upper-mold-side bending operation, and the lower-mold-side bending operation, each of the upper mold tool and the lower mold tool are replaced with another one depending on pitches of the leg portion and the crown portion of the coil.
